# EUROPÄISCHE PATENTANMELDUNG

(11) **EP 0 875 290 A1**
(43) Veröffentlichungstag der Anmeldung: **04.11.1998**
(21) Anmeldenummer: 98104414.2
(22) Anmeldetag: 12.03.1998
(51) Int. Cl.: B01J 37/02

(54) **Verfahren zum Abscheiden von katalytisch aktiven Komponenten auf hochoberflächigen Trägermaterialien**

(30) Priorität: 09.04.1997 DE 19714732
(71) Anmelder: Degussa Aktiengesellschaft, 60311 Frankfurt (DE)
(72) Erfinder: van Yperen, Renee, Dr., XC Loenen a/d Vecht (NL); Lindner, Dieter, Dr., 63457 Hanau (DE); Mussmann, Lothar, Dr., 63067 Offenbach (DE); Lox, Egbert, Dr., 63457 Hanau (DE); Kreuzer, Thomas, Dr., 61184 Karben (DE)

(57) **Zusammenfassung**

Die Erfindung betrifft eine Verfahren zum Abscheiden von katalytisch aktiven Komponenten auf hochoberflächige Trägermaterialien durch Dispergieren der Trägermaterialien in Wasser und Vermischen dieser Dispersion mit einer wäßrigen Lösung von löslichen Vorstufen der katalytisch aktiven Komponenten. Das Verfahren ist dadurch gekennzeichnet, daß der pH-Wert der Dispersion auf einen Wert zwischen 6 und 8 eingestellt wird, bevor die wäßrige Lösung der Vorstufen unter ständigem Rühren der Dispersion mittels Kapillarinjektion zugeführt und daß danach gegebenenfalls die Vorstufen der katalytisch aktiven Komponenten durch Kapillarinjektion einer verdünnten Base auf dem Trägermaterial ausgefällt werden.

## Beschreibung

Die Erfindung betrifft ein Verfahren zum Abscheiden von katalytisch aktiven Komponenten auf hochoberflächigen Trägermaterialien durch Dispergieren der Trägermaterialien in Wasser und Vermischen dieser Dispersion mit einer wäßrigen Lösung von löslichen Vorstufen der katalytisch aktiven Komponenten.

In der Katalyse, insbesondere bei der katalytischen Abgasreinigung von Verbrennungskraftmaschinen, werden sogenannte Trägerkatalysatoren eingesetzt. Bei diesen Katalysatoren werden die eigentlichen katalytisch aktiven Komponenten in hochdisperser Form auf Trägermaterialien aufgebracht, um mit möglichst geringen Mengen aktiver Komponenten eine hohe katalytische Aktivität des Katalysators zu gewährleisten. Zu diesem Zweck werden Trägermaterialien verwendet, die eine große spezifische Oberfläche zur Aufnahme der katalytisch aktiven Komponenten besitzen. Es handelt es sich dabei zumeist um pulverförmige, temperaturstabile Metalloxide.

Im Falle von Autoabgaskatalysatoren werden die Trägermaterialien in Form einer Beschichtung auf katalytisch inerte Tragkörper aufgebracht. Als Tragkörper eignen sich für die Autoabgasreinigung sogenannte Wabenkörper aus Keramik oder Metall, die von parallelen Strömungskanälen für das Abgas durchzogen werden. Zum Beschichten der Wahenkörper mit den Trägermaterialien werden die Trägermaterialien zumeist in Wasser dispergiert und gewöhnlich durch einen Mahlvorgang homogenisiert. Durch das Mahlen wird die mittlere Korngröße der Trägermaterialien auf einen Wert zwischen 1 und 10 µm eingestellt.

Die Wände der Strömungskanäle werden durch ein- oder mehrmaliges Eintauchen der Wabenkörper in diese Beschichtungsdispersion mit nachfolgendem Trocknen und Kalzinieren beschichtet. Die fertige Beschichtung wird auch als Dispersionsbeschichtung bezeichnet.

Bei dieser Vorgehensweise können die katalytisch aktiven Komponenten zu verschiedenen Zeitpunkten auf die spezifische Oberfläche der Trägermaterialien aufgebracht werden. Es ist zum Beispiel bekannt, die katalytisch aktiven Komponenten erst nach Beschichten der Wabenkörper mit der Dispersionsbeschichtung durch Eintauchen der beschichteten Wabenkörper in eine wäßrige Lösung von löslichen Vorstufen der katalytisch aktiven Komponenten auf den Trägermaterialien abzuscheiden. Alternativ hierzu besteht die Möglichkeit, die katalytisch aktiven Komponenten in einem dem Anfertigen der Dispersionsbeschichtung vorgeschalteten Arbeitsschritt auf den pulverförmigen Trägermaterialien abzuscheiden.

Die vorliegende Erfindung befaßt sich mit dieser zweiten Möglichkeit der Abscheidung der katalytisch aktiven Komponenten. Zur Erreichung einer hohen katalytischen Aktivität muß die Art der Abscheidung eine möglichst feindisperse Abscheidung der Komponenten auf der spezifischen Oberfläche der Trägermaterialien gewährleisten. Darüber hinaus soll die Art der Abscheidung auch zu einer hohen Temperatur- und Alterungsstabilität des fertigen Katalysators führen, das heißt, die Partikel der katalytisch aktiven Komponenten müssen gut auf der Oberfläche der Trägermaterialien fixiert sein, um ein Zusammenwachsen benachbarter Partikel bei Temperaturbelastungen des Katalysators zu verhindern.

Für das Abscheiden der katalytisch aktiven Komponenten auf den pulverförmigen Trägermaterialien sind verschiedene Verfahren bekannt geworden. Hierzu gehört zum Beispiel die Imprägnierung mit einem Überschuß an Imprägnierlösung. Hierbei wird dem pulverförmigen Trägermaterial eine wäßrige Lösung der katalytisch aktiven Komponenten zugesetzt, deren Volumen wesentlich größer sein kann als die Wasseraufnahmekapazität des Trägermaterials. Es resultiert dabei eine Masse mit breiiger Konsistenz, die zum Beispiel in einem Ofen bei erhöhten Temperaturen von 80 bis 150°C entwässert wird. Beim Entwässern dieser Masse kann es zu chromatografischen Effekten kommen, die zu einer ungleichmäßigen Verteilung der katalytisch aktiven Komponenten auf dem Trägermaterial führen kann.

Bei der sogenannten Porenvolumenimprägnierung wird zur Lösung der katalytisch aktiven Komponenten eine Menge an Lösungsmittel verwendet, die etwa 70 bis 100% der Aufnahmekapazität des Trägermaterials für dieses Lösungsmittel entspricht. In der Regel handelt es sich hierbei um Wasser. Diese Lösung wird möglichst gleichmäßig zum Beispiel durch Sprühen über das in einem Kessel umgewälzte Trägermaterial verteilt. Nach Verteilung der gesamten Lösung über dem Trägermaterial ist dieses trotz des Wassergehaltes immer noch rieselfähig. Mit der Porenvolumenimprägnierung können chromatografische Effekte weitgehend vermieden werden. Sie liefert in der Regel bessere Ergebnisse als das oben beschriebene Verfahren der Imprägnierung mit einem Überschuß an Lösungsmittel.

Van Dillen et al. (Proc. 6^{th} Int. Conf. on Cat., London, ed. G.C. Bond, P.B. Wells, F.C. Tomkins, 2667 (1976)) beschreiben ein Verfahren zur Herstellung von Kupfer- und Nickelkatalysatoren auf hochoberflächigen Trägermaterialien, welches als homogenes Ausfällungsverfahren bezeichnet werden kann. Bei diesem Verfahren wird das Trägermaterial zusammen mit mit einem Vorläufer der aktiven Komponente in Wasser dispergiert. Durch Injektion einer basischen oder sauren Lösung in die Dispersion mit Hilfe einer Kapillare (Kapillarinjektion) wird die aktive Komponente auf der Oberfläche des Trägermaterials abgeschieden. Um ein schnelles Ausfällen der aktiven Komponenten in der Lösung selbst zu vermeiden, muß das Ausfällen bei nur geringen Übersättigungen der gesamten Dispersion vorgenommen werden. Um ein homogenes Ausfällen in der ganzen Lösung gleichzeitig zu gewährleisten, muß die basische oder saure Lösung in geringen Mengen pro Zeiteinheit zugeführt und durch Rühren der Dispersion gleichmäßig in dieser verteilt werden.

Aufgabe der vorliegenden Erfindung ist die Angabe eines verbesserten Verfahrens zur homogenen Ausfällung von katalytisch aktiven Edelmetallen der Platingruppe des Periodensystems der Elemente auf hochoberflächigen Trägermaterialien für Anwendungen in der Autoabgasreinigung.

Diese Aufgabe wird gelöst durch ein Verfahren zum Abscheiden von katalytisch aktiven Komponenten auf hochoberflächige Trägermaterialien durch Dispergieren der Trägermaterialien in Wasser und Vermischen dieser Dispersion mit einer wäßrigen Lösung von löslichen Vorstufen der katalytisch aktiven Komponenten. Das Verfahren ist dadurch gekennzeichnet, daß der pH-Wert der Dispersion auf einen Wert zwischen 6 und 8 eingestellt wird, bevor die wäßrige Lösung der Vorstufen unter ständigem Rühren der Dispersion mittels Kapillarinjektion zugeführt und daß danach gegebenenfalls die Vorstufen der katalytisch aktiven Komponenten durch Kapillarinjektion einer verdünnten Base auf dem Trägermaterial ausgefällt werden.

Die Lösung der Vorstufen wird mit Hilfe einer oder mehrerer Kapillaren unter der Oberfläche der wäßrigen Trägerdispersion in die Dispersion injiziert und mit Hilfe eines Rührers schnell über das gesamte Dispersionsvolumen verteilt. Die Injektionsrate wird so gewählt, daß eine möglichst schnelle und homogene Verteilung der gelösten Vorstufen der katalytisch aktiven Komponenten in der Dispersion erfolgt. Dabei kann es schon zu einer gewissen Adsorption der Vorläuferverbindungen auf der spezifischen Oberfläche des Trägermaterials und damit zur Bildung von Kristallisationskeimen kommen. Das Ausmaß dieser Adsorption hängt von der Materialkombination Trägermaterial/katalytisch aktive Komponenten ab und kann in bestimmten Fällen schon zu einer nahezu vollständigen Adsorption der katalytisch aktiven Komponenten führen. In diesen Fällen kann die Zugabe einer Base zur Ausfällung der katalytisch aktiven Komponenten in Form ihrer Hydroxide entfallen.

Bei Materialkombinationen, die keine ausreichende Adsorption der Vorstufen auf dem Trägermaterial gewährleisten, oder wenn eine chemische Fixierung der katalytisch aktiven Komponenten auf dem Trägermaterial gewünscht ist, können die katalytisch aktiven Komponenten durch Kapillarinjektion einer Base, bevorzugt einer verdünnten Ammoniaklösung, auf dem Trägermaterial ausgefällt werden. Bei der Injektion der Base müssen die Injektionsrate und die Rührgeschwindigkeit so gewählt werden, daß eine Ausfällung in der wäßrigen Phase der Dispersion vermieden wird und nur eine Ausfällung an den Kristallisationskeimen auf dem Trägermaterial erfolgt.

Die resultierende Dispersion kann direkt zu einer Beschichtungsdispersion weiterverarbeitet werden. Alternativ hierzu kann die Dispersion jedoch zunächst abfiltriert und in einem Trockenschrank getrocknet und gegebenenfalls anschließend kalziniert werden, bevor das kalzinierte Material zur Anfertigung der Beschichtungsdispersion erneut dispergiert und durch Mahlen homogenisiert wird.

Mit dem Verfahren können entweder alle Komponenten der späteren Beschichtungsdispersion gleichzeitig mit den katalytisch aktiven Komponenten belegt werden oder auch nur einzelne ausgewählte Komponenten.

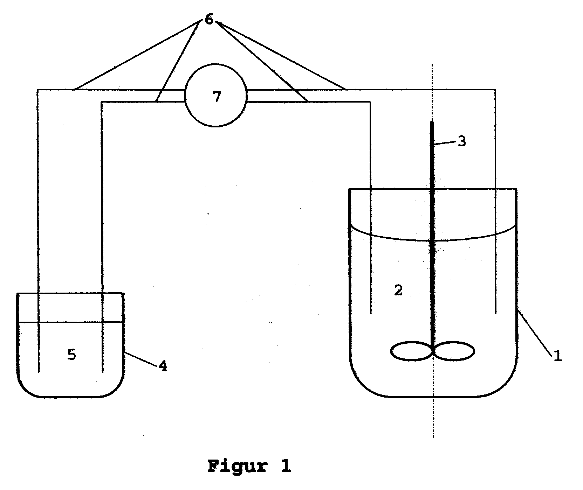

Figur 1 zeigt eine mögliche Apparatur zur Durchführung des erfindungsgemaßen Verfahrens. Im Gefäß 1 wird eine wäßrige Dispersion 2 des oder der Trägermaterialien angesetzt. Aus dem Vorlagegefäß 4 wird eine vorbereitete Lösung der Vorstufen oder Vorläuferverbindungen 5 der katalytisch aktiven Komponenten mit einem oder mehreren Kapillarschläuchen 6 (Innendurchmesser etwa 1 mm) unter der Oberfläche in die Dispersion 2 injiziert. Die Dispersion wird dabei mit Hilfe des Rührers 3 ständig gerührt. 7 bezeichnet eine Schlauchpumpe. Danach kann aus einem weiteren, hier nicht gezeigten Vorlagegefäß, eine verdünnte Ammoniaklösung in ganz analoger Weise in die nun vorliegende Mischung aus Dispersion und Lösung der Vorstufen injiziert werden, um die katalytisch aktiven Komponenten durch Anheben des pH-Wertes der Mischung auf dem Trägermaterial auszufällen.

Die hier gezeigte Apparatur eignet sich für kleine Materialansätze und wurde in dieser Form auch für das folgende Beispiel benutzt. Das homogene Ausfällungsverfahren kann jedoch auch kontinuierlich durchgeführt werden, indem die Dispersion des Trägermaterials in einem kontinuierlichen Strom durch ein Rühr- oder Mahlaggregat geführt wird. Zur homogenen Einmischung der Vorläuferverbindungen und der Ammoniaklösung können zwei solcher Aggregate hintereinander geschaltet werden. Die Lösung der Vorläuferverbindungen und die Ammoniaklösung werden zweckmäßigerweise direkt in die Rühr- beziehungsweise Mahlaggregate injiziert.

### Beispiel

Es wurde ein nur Palladium enthaltender Autoabgaskatalysator unter Verwendung des erfindungsgemäßen Verfahrens hergestellt. Hierfür wurden folgende Materialien verwendet:
- **La/Al**_{**2**}**O**_{**3**}**:**: γ-Aluminiumoxid, stabilisiert mit 2 bis 4 Gew.-% Lanthan, berechnet als Lanthanoxid; BET-Oberfläche: 140 m²/g; anfängliche Korngröße: d₅₀ ≈ 15 µm;
- **CeO**_{**2**}**/ZrO**_{**2**}**:**: co-gefälltes Cer/Zirkon-Mischoxid; Gehalt an Zirkonoxid: 30 Gew.-%; BET-Oberfläche: 60 m²/g; anfängliche Korngröße: d₅₀ ≈ 30 µm;
- **Ce(C**_{**2**}**H**_{**3**}**O**_{**2**}**)**_{**3**}**:**: Ceracetat
- **Zr0(C**_{**2**}**H**_{**3**}**O**_{**2**}**)**_{**2**}**:**: Zirkonylacetat
- **Ba(C**_{**2**}**H**_{**3**}**O**_{**2**}**)**_{**2**}**:**: Bariumacetat
- **Pd(NO**_{**3**}**)**_{**3**}**:**: Palladiumnitrat
- **Tragkörper:**: Wabenkörper aus Cordierit mit 62 Kanälen pro Quadratzentimeter Querschnittsfläche; Abmessungen: 3,8 cm Durchmesser; 15,2 cm Länge Zelldichte: 62 cm⁻² Wandstärke: 0,17 mm

Zur Beschichtung des Tragkörpers wurde eine Beschichtungsdispersion angesetzt, welche pro 1000 g stabilisiertes Aluminiumoxid 300 g Cer/Zirkon-Mischoxid, 300 g Ceroxid als Ceracetat, 300 g Zirkonoxid als Zirkonylacetat und 200 g Bariumoxid als Bariumacetat enthielt. Die fertige Beschichtungsdispersion wies einen Feststoffgehalt von 45 Gew.-% auf.

Die zuvor vorbereitete Palladiumnitratlösung mit einem Palladiumgehalt von 0,05 Gew.-% wurde mit einer Rate von 16 ml/min mit Hilfe zweier Kapillarschläuche unter der Oberfläche der schnell gerührten Dispersion in die Dispersion injiziert. Nach einer Rührdauer von 24 Stunden wurde der Wabenkörper durch Eintauchen in die Dispersion beschichtet, bei 120°C an Luft getrocknet und anschließend 2 Stunden bei 600°C kalziniert. Der fertige Katalysator enthielt etwa 210 g Katalysatormaterial pro Liter Wabenkörpervolumen. Sein Palladiumgehalt betrug 3,5 g/l Wabenkörpervolumen.

In einem Anwendungstest zeigte der Katalysator deutlich verbesserte Umsetzungsraten insbesondere für Kohlenmonoxid und die Stickoxide im Vergleich zu einem konventionell hergestellten Katalysator.

## Patentansprüche

1. Verfahren zum Abscheiden von katalytisch aktiven Komponenten auf hochoberflächige Trägermaterialien durch Dispergieren der Trägermaterialien in Wasser und Vermischen dieser Dispersion mit einer wäßrigen Lösung von löslichen Vorstufen der katalytisch aktiven Komponenten,
**dadurch gekennzeichnet,**
daß der pH-Wert der Dispersion auf einen Wert zwischen 6 und 8 eingestellt wird, bevor die wäßrige Lösung der Vorstufen unter ständigem Rühren der Dispersion mittels Kapillarinjektion zugeführt und daß danach gegebenenfalls die Vorstufen der katalytisch aktiven Komponenten durch Kapillarinjektion einer verdünnten Base auf dem Trägermaterial ausgefällt werden.
